# EUROPÄISCHE PATENTSCHRIFT

(11) **EP 3 795 326 B1**
(45) Veröffentlichungstag und Bekanntmachung des Hinweises auf die Patenterteilung: **26.07.2023**
(21) Anmeldenummer: 20184377.8
(22) Anmeldetag: 07.07.2020
(51) Int. Cl.: B29C 45/14, B29C 45/26, B29L 31/00

(54) **SPRITZGIESSVORRICHTUNG, VERFAHREN ZUM SPRITZGIESSEN VON MEHRKOMPONENTEN-TEILEN SOWIE COMPUTERPROGRAMM UND COMPUTERLESBARES MEDIUM**
INJECTION MOULDING DEVICE, METHOD FOR INJECTION MOULDING OF MULTI-COMPONENT PARTS, AND COMPUTER PROGRAM AND COMPUTER READABLE MEDIUM
DISPOSITIF DE MOULAGE PAR INJECTION, PROCÉDÉ DE MOULAGE PAR INJECTION DE PIÈCES À COMPOSANTS MULTIPLES, AINSI QUE PROGRAMME INFORMATIQUE ET SUPPORT LISIBLE PAR ORDINATEUR

(30) Priorität: 19.09.2019 DE 102019125251
(43) Veröffentlichungstag der Anmeldung: 24.03.2021
(73) Patentinhaber: Zahoransky Automation & Molds GmbH, 79108 Freiburg (DE)
(72) Erfinder: SCHULZ, Jürgen, 79111 Freiburg (DE)
(74) Vertreter: Mertzlufft-Paufler, Cornelius

(56) Entgegenhaltungen:
- WO-A2-2009/091895
- AT-B- 308 386
- CH-A1- 706 504
- DE-B- 1 073 193
- JP-A- H0 716 886
- US-A1- 2018 021 994

## Beschreibung

Die Erfindung betrifft eine Spritzgießvorrichtung mit einer Spritzgießform, die zumindest einen Formhohlraum zur wenigstens bereichsweisen Aufnahme eines Funktionsteils und zum Anspritzten eines Kunststoffformteils an das Funktionsteil zur Bildung eines Mehrkomponententeils, insbesondere einer Spritze, aufweist.

Ferner betrifft die Erfindung auch ein Verfahren zum Spritzgießen von Mehrkomponententeilen, jeweils zumindest ein Funktionsteil und ein daran angespritztes Kunststoffformteil umfassen, insbesondere von Spritzen, unter Verwendung einer derartigen Spritzgießvorrichtungen.

Darüber hinaus betrifft die Erfindung auch ein Computerprogramm sowie ein computerlesbares Medium, auf dem das Computerprogramm gespeichert ist.

Spritzgießvorrichtungen und Verfahren der eingangs genannten Art zur Herstellung von Mehrkomponententeilen sind aus der Praxis und dem Stand der Technik in unterschiedlichen Ausführungsformen vorbekannt, so beispielsweise aus den Druckschriften EP 3 047 867 A1, EP 2 140 896 A1, DE 10 2011 102 449 A1, JP H07 16886 A, WO 2009/091895 A2, AT 308 386 B sowie DE 10 73 193 B. Jede dieser Druckschriften offenbart den Oberbegriff des Anspruchs 1 und des Anspruchs 11.

Vor allem bei der Herstellung hochpräziser Mehrkomponententeilen, beispielsweise von spritzgegossenen Spritzen oder Kanülen, die ein Kunststoffformteil in Form beispielsweise eines Spritzenzylinders, und ein Funktionsteil, beispielsweise in Form einer Hohlnadel, aufweisen, ist es erforderlich, die Funktionsteile beim Anspritzen des Kunststoffformteil zuverlässig und präzise zu halten bzw. aufzuspannen. Dies kann mit beträchtlichem Aufwand verbunden sein.

Aufgabe der Erfindung ist es daher, eine Spritzgießvorrichtung sowie ein Verfahren zum Spritzgießen von Mehrkomponententeilen, insbesondere von Spritzen, der eingangs genannten Art bereitzustellen, mit denen Funktionsteile beim Anspritzen von Kunststoffformteilen zuverlässig und gleichzeitig einfach gehalten werden können.

Zur Lösung dieser Aufgabe wird zunächst eine Spritzgießvorrichtung der eingangs genannten Art vorgeschlagen, die die Mittel und Merkmale des ersten unabhängigen, auf eine solche Spritzgießvorrichtung gerichteten Anspruchs umfasst. So wird zur Lösung der Aufgabe insbesondere eine Spritzgießvorrichtung der eingangs genannten Art vorgeschlagen, die zumindest einen Funktionsteilhalter aufweist, der eine Klemmhülse zum klemmenden Halten eines Funktionsteils in seiner Spritzposition umfasst, in der das Funktionsteil zumindest bereichsweise in den Formhohlraum hineinragt. Bei der erfindungsgemäßen Spritzgießvorrichtung kann eine Klemmung der Funktionsteile zumindest zum Teil in den zumindest einen Funktionsteilhalter integriert sein.

Mithilfe der Klemmhülse lassen sich die möglicherweise empfindlichen Funktionsteile schonend halten und klemmen. Mit der Klemmhülse können Klemmkräfte auf eine vergleichsweise große Fläche des zu klemmenden Funktionsteils übertragen werden. Dies hilft, lokale Druckspitzen an dem Funktionsteil zu vermeiden, wodurch Beschädigungen an den Funktionsteilen vermieden werden können. Vor allem bei der Herstellung von Spritzen, bei denen als Funktionsteile Hohlnadeln, die gegebenenfalls an einem distalen Ende einen Schliff aufweisen können, mit Kunststoff umspritzt werden, ist es vorteilhaft, wenn die Funktionsteile mithilfe der Klemmhülse nicht nur sicher, sondern auch schonend gehalten werden. Dies hilft, Ausschussproduktion zu reduzieren oder gar vollständig zu vermeiden.

Die Spritzgießvorrichtung weist eine Klemmvorrichtung mit zumindest einem Klemmstempel auf. Mithilfe dieses zumindest ein Klemmstempels können Klemmkräfte aufgebracht und über die Klemmhülse auf ein darin befindliches Funktionsteil übertragen werden, um das in der Klemmhülse befindliche Funktionsteil festzuklemmen und zum Spritzgießen des Kunststoff-Formteils zu fixieren.

Die Klemmvorrichtung kann zumindest ein Stellmittel, insbesondere einen Druckzylinder, aufweisen, der zur Betätigung des zumindest einen Klemmstempels der Klemmvorrichtung vorgesehen ist. Die Verwendung eines Druckzylinders kann vorteilhaft sein, um den Klemmstempel bei Bedarf mit unterschiedlicher Kraft oder unterschiedlichem Druck gegen die Klemmhülse zu pressen, um das in der Klemmhülse befindliche Funktionsteil unterschiedlich festzuhalten.

Die Klemmhülse kann einen Klemmschlitz aufweisen. Mithilfe des Klemmschlitzes kann die Nachgiebigkeit der Hülse zum Festklemmen eines darin befindlichen Funktionsteils vorgegeben werden. Der Klemmschlitz kann vorzugsweise in Längsrichtung der Klemmhülse verlaufen. So wird ein Klemmabschnitt an der Klemmhülse definiert, der sich über einen vergleichsweise großen Bereich eines in der Klemmhülse befindlichen Funktionsteils erstrecken kann. Auf diese Weise wird die auf das Funktionsteil von der Klemmhülse übertragene Haltekraft auf eine vergleichsweise große Fläche des Funktionsteils übertragen. Dies kann eine schonende Klemmung des Funktionsteils mithilfe der Klemmhülse begünstigen.

Der Klemmschlitz kann im Bereich seiner beiden Enden zur Materialschwächung der Hülse jeweils eine Erweiterung aufweisen. Der zuvor bereits erwähnte Klemmabschnitt der Klemmhülse kann zwischen den beiden Erweiterungen angeordnet sein. Die beiden Erweiterungen können dazu dienen, den Klemmabschnitt der Klemmhülse nachgiebig zu gestalten, sodass er gezielt und möglichst gleichmäßig verformt werden kann. Dies mit dem Ziel, ein innerhalb der Klemmhülse befindliches Funktionsteil mithilfe der Klemmhülse sicher und schonend klemmen zu können.

Die Klemmhülse des zumindest eine Funktionsteilhalter weist erfindungsgemäß eine Funktionsteilaufnahme und einen Klemmabschnitt, der bereits zuvor erläutert wurde, auf. Die Funktionsteilaufnahme ist zumindest zum Teil innerhalb der Klemmhülse ausgebildet und nimmt das Funktionsteil bestimmungsgemäß in sich auf. Der Klemmabschnitt kann eine außenseitige Druckfläche aufweisen, die zur Verengung der Funktionsteilaufnahme mit dem Klemmstempel der Klemmvorrichtung beaufschlagt werden kann. Zumindest ein Teil der Funktionsteilaufnahme kann seitlich durch den Klemmabschnitt der Klemmhülse begrenzt seien. Der Klemmabschnitt der Klemmhülse kann zwischen der Funktionsteilaufnahme und dem zumindest einen Klemmstempel der Klemmvorrichtung angeordnet sein.

Der zumindest eine Funktionsteilhalter kann einen Einführtrichter zum Einführen eines Funktionsteils in eine, beispielsweise, die bereits zuvor erwähnte Funktionsteilaufnahme aufweisen. Dabei kann der Einführtrichter vorzugsweise in oder an der Klemmhülse angeordnet oder ausgebildet sein. Der Einführtrichter kann das Einführen eines, insbesondere länglichen, Funktionsteils, wie beispielsweise einer Hohlnadel oder einer Nadel für eine Spritze, in die Funktionsteilaufnahme der Klemmhülse erleichtern.

Die Spritzgießvorrichtung kann ferner zumindest einen weiteren Funktionsteilhalter aufweisen, der auf einen anderen Funktionsteiltyp abgestimmt ist. Der zumindest eine, bereits zuvor erwähnte Funktionsteilhalter kann auf einen ersten Funktionsteiltyp abgestimmt sein. Mithilfe des zumindest einen weiteren Funktionsteilhalters ist es dann möglich, ein Funktionsteil eines anderen Funktionsteiltyps auf der Spritzgießvorrichtung zu verarbeiten, ohne diese aufwändig umrüsten zu müssen. Auch der zumindest eine weitere Funktionsteilhalter kann eine Klemmhülse umfassen ausgebildet sein.

Die zuvor erläuterten Merkmale der Klemmhülse des zumindest einen bereits beschriebenen Funktionshalters lassen sich ohne Weiteres auch auf die Klemmhülse des zumindest einen weiteren Funktionsteilhalters der Spritzgießvorrichtung übertragen.

Die Spritzgießvorrichtung kann ferner zumindest ein Platzhalterelement aufweisen, das in seiner Gebrauchsstellung als Platzhalter für einen Funktionsteilhalter mit einem Funktionsteil an dem Formhohlraum der Spritzgießform positioniert werden kann. Die Verwendung eines derartigen Platzhalterelements ist vorteilhaft, wenn Vorspritzlinge ohne Funktionsteil gespritzt werden sollen. Vorspritzlinge stellen Ausschussprodukte dar, die solange produziert werden, bis die Spritzgießmaschine ihren vorgesehenen Betriebszustand erreicht hat und die Produktion der Mehrkomponententeile aufgenommen werden kann. Vorspritzlinge werden zum Beispiel nach Betriebspausen produziert, während die Spritzgießvorrichtung angefahren oder hochgefahren wird.

Bisher wurden bei den aus der Praxis vorbekannten Spritzgießvorrichtungen Vorspritzlinge mit Funktionsteilen hergestellt. Dies ist aus Gründen des Recyclings jedoch nachteilhaft, da es notwendig ist, die Funktionsteile von den Kunststoffformteilen, die an die Funktionsteile angespritzt werden, zu trennen. Die Trennung der Funktionsteile von den angespritzten Kunststoffformteilen ist jedoch mit hohem Aufwand verbunden. Da die Funktionsteile oftmals wertmäßig den größten Anteil an dem Mehrkomponententeil darstellen, ist es ferner wünschenswert, eine Verschwendung von Funktionsteilen bei der Herstellung von Vorspritzlingen zu vermeiden. Die Herstellung von Vorspritzlingen, die hohen Qualitätsanforderungen nicht genügen, ist, wie zuvor bereits erwähnt wurde, beispielsweise beim Anfahren der Spritzgießvorrichtung notwendig. In diesem Fall werden so lange Vorspritzlinge produziert, bis die Spritzgießform die für das Spritzgießen der Mehrkomponententeile notwendige Temperatur hat. Es sind andere Anwendungsfälle denkbar, in denen Vorspritzlinge hergestellt werden sollen. Beispielsweise dann, wenn Reparatur- oder Instandhaltungsmaßnahmen an der Spritzgießvorrichtung vorgenommen werden sollen, ohne die Spritzgießvorrichtung anzuhalten. In den Zuführkanälen der Spritzgießvorrichtung stehendes Material kann sich durch Temperatureinfluss und/oder über die Zeit nämlich so verändern, dass eine ordnungsgemäße Herstellung von Mehrkomponententeilen nicht mehr möglich ist. Um damit verbundene Schwierigkeiten und Kosten zu vermeiden, wird es daher bevorzugt, die Spritzgießvorrichtung weiter zu betreiben, auch wenn dann Vorspritzlinge bzw. Ausschussproduktion auftritt.

Mithilfe des Platzhalterelements ist es also möglich, bei Bedarf Vorspritzlinge zu fertigen, die keine vergleichsweise teuren Funktionsteile aufweisen und so viel einfacher der Wiederverwertung/dem Recycling zugeführt werden können.

Um wahlweise den zumindest einen Funktionsteilhalter und den zumindest einen weiteren Funktionsteilhalter und/oder das zuvor erwähnte Platzhalterelement in ihre Gebrauchsstellung positionieren zu können, kann es vorteilhaft sein, wenn die Spritzgießvorrichtung eine Wechselvorrichtung umfasst. Mithilfe der Wechselvorrichtung kann eine Umrüstung der Spritzgießvorrichtung automatisch oder zumindest auf Knopfdruck erfolgen.

Die Spritzgießvorrichtung kann eine Funktionsteileinlegevorrichtung aufweisen. Mit einer Funktionsteileinlegevorrichtung kann ein Funktionsteil in den zumindest einen Funktionsteilhalter einlegbar sein. Bei einer Spritzgießvorrichtung, die mehr als nur einen Funktionsteilhalter aufweist, kann es vorteilhaft sein, wenn die Funktionsteileinlegevorrichtung zum gleichzeitigen Einlegen einer entsprechenden Anzahl von Funktionsteilen in die vorhandenen Funktionsteilhalter eingerichtet ist. In diesem Zusammenhang sei erwähnt, dass die Spritzgießvorrichtung eine Spritzgießform aufweisen kann, die als Mehrfachform ausgebildet ist, in der eine Mehrzahl von Formhohlräumen zur Herstellung von Mehrkomponententeilen vorgesehen ist.

Die Funktionsteile können, wie bereits zuvor erwähnt, Nadeln oder Hohlnadeln für Spritzen sein. Der zumindest eine Funktionsteilhalter der Spritzgießvorrichtung, insbesondere die Klemmhülse, können dementsprechend als Nadelhalter ausgebildet sein. Ein erster Funktionsteilhalter der Spritzgießvorrichtung kann dabei auf einen ersten Nageldurchmesser abgestimmt sein, während zumindest ein weiterer Funktionsteilhalter der Spritzgießvorrichtung auf einen anderen Nadeldurchmesser abgestimmt sein kann. Auf diese Weise ist es möglich, auf der Spritzgießvorrichtung unterschiedliche Mehrkomponententeile, nämlich Spritzen, zu fertigen, die sich beispielsweise durch ihre Nadeldurchmesser unterscheiden. Mithilfe der unterschiedlichen Funktionsteilhalter ist es möglich, die Spritzgießvorrichtung vergleichsweise einfach umzurüsten, ohne aufwändige weitere Arbeitsschritte dafür an dieser vornehmen zu müssen. In diesem Zusammenhang kann es vorteilhaft sein, wenn die Spritzgießvorrichtung die bereits zuvor erwähnte Wechselvorrichtung aufweist.

Die Spritzgießform kann zumindest drei Formplatten aufweisen, die zwischen einer geschlossenen Spritzposition und einer Bearbeitungsposition mit jeweils zueinander beabstandeten Formplatten verstellbar sind. Auf diese Weise ist es möglich, beispielsweise die fertigen Spritzlinge, also die Mehrkomponententeile, zu entnehmen und für einen nächsten Schuss neue Funktionsteile einzulegen.

Der Formhohlraum kann dabei zwischen zwei Formplatten ausgebildet sein, während an der dritten Formplatte der zumindest eine Funktionsteilhalter und/oder zumindest ein weiterer Funktionsteilhalter und/oder ein Platzhalterelement der Spritzgießvorrichtung angeordnet sind.

Zur Lösung der Aufgabe wird schließlich auch ein Verfahren der eingangs genannten Art zum Spritzgießen von Mehrkomponententeilen, insbesondere von Spritzen, vorgeschlagen, das die Mittel und Merkmale, des unabhängigen, auf ein derartiges Verfahren gerichteten Anspruchs aufweist.

Zur Lösung der Aufgabe wird somit insbesondere bei dem eingangs genannten Verfahren zum Spritzgießen von Mehrkomponententeilen vorgeschlagen, dass ein Funktionsteil in eine Klemmhülse eines Funktionsteilhalters der Spritzgießvorrichtung eingeführt wird, und dass das Funktionsteil mit der Klemmhülse klemmend in seiner Spritzposition gehalten wird, wobei das Funktionsteil zumindest bereichsweise in den einen Formhohlraum einer Spritzgießform der Spritzgießvorrichtung hineinragt. Anschließend kann das Kunststoffformteil an das Funktionsteil angespritzt werden. Die Vorteile der Klemmhülse wurden bereits im Zusammenhang mit der Spritzgießvorrichtung eingehend erläutert. Insofern wird auf die entsprechenden Abschnitte weiter oben im Text verwiesen.

Das Funktionsteil kann, insbesondere mit einer Funktionsteileinlegevorrichtung der Spritzgießvorrichtung, durch eine, insbesondere stirnseitige, Einführöffnung des Funktionsteilhalters in eine Funktionsteilaufnahme des Funktionsteilhalters eingeführt werden. Die Funktionsteilaufnahme kann dabei zumindest abschnittsweise innerhalb der Klemmhülse verlaufen.

Die Klemmhülse wird erfindungsgemäß mit einer Klemmvorrichtung der Spritzgießvorrichtung beaufschlagt, um das Funktionsteil in der Klemmhülse festzuklemmen. Dies erfolgt mit einem Klemmstempel der Klemmvorrichtung. Dabei kann ein Klemmschlitz der Klemmhülse und dadurch eine, beispielsweise die bereits zuvor erwähnte, Funktionsteilaufnahme verengt werden. Wenn das Funktionsteil in der Funktionsteilaufnahme des Funktionsteilhalters angeordnet ist, wird es dabei innerhalb der Funktionsteilaufnahme und damit innerhalb der Klemmhülse fixiert.

Eine Druckfläche eines Klemmabschnitts der Klemmhülse wird hierbei mit dem Klemmstempel beaufschlagt, um das Funktionsteil fest zu klemmen. Dabei wird der Klemmstempel quer zu einer Längserstreckung der Klemmhülse zugestellt.

Bei einer Ausführungsform des Verfahrens ist vorgesehen, dass der Klemmstempel die Klemmhülse, insbesondere die Druckfläche der Klemmhülse, nicht beaufschlagt, wenn das Funktionsteil mit einer, beispielsweise der bereits zuvor erwähnten, Funktionsteileinlegevorrichtung in die Klemmhülse eingeführt wird. Auf diese Weise kann ein Widerstand beim Einführen des Funktionsteils in die Klemmhülse minimiert werden. Der Klemmstempel kann die Klemmhülse mit einer Rückhaltedruckkraft beaufschlagen, wenn das Funktionsteil zumindest ein Stück weit in die Klemmhülse eingeführt ist. Dadurch kann das Funktionsteil in der Klemmhülse gehalten werden, wenn eine, beispielsweise die bereits zuvor erwähnte, Funktionsteileinlegevorrichtung, mit der das Funktionsteil in die Klemmhülse eingeführt wurde, in ihre Ausgangsstellung zurückbewegt wird.

Das Funktionsteil kann bei einer Ausführungsform des Verfahrens durch Schließen der Spritzgießform in seine Spritzposition geschoben werden. Dies kann beispielsweise durch einen an einer Formplatte der Spritzgießvorrichtung ausgebildeten Spritzendorn geschehen, der genutzt wird, um ein Kunststoffformteil in Form eines Spritzenzylinders auszuformen. Währenddessen kann der Klemmstempel die Klemmhülse mit einer Druckkraft beaufschlagen, die vorzugsweise kleiner als die zuvor bereits erwähnte Rückhaltedruckkraft sein kann, die zum Zurückhalten des Funktionsteils in der Klemmhülse aufgebracht wird, wenn die Funktionsteileinlegevorrichtung in ihre Ausgangsstellung zurückbewegt werden soll, ohne das Funktionsteil aus der Klemmhülse auszuziehen. Durch den Klemmstempel kann verhindert werden, dass das Funktionsteil beim Schließen der Spritzgießform seitlich ausbricht und dabei beschädigt wird.

Der Klemmstempel kann die Klemmhülse ferner auch dann mit einer Druckkraft beaufschlagen, wenn das Kunststoffformteil an das Funktionsteil angespritzt wird. Diese Druckkraft kann größer als die Rückhaltedruckkraft sein, die der Klemmstempel auf die Klemmhülse aufbringen kann, wenn eine, beispielsweise die bereits zuvor erwähnte Funktionsteileinlegevorrichtung in ihre Ausgangsstellung bewegt wird. Auf diese Weise wird verhindert, dass das Funktionsteil seine Position in der Klemmhülse verändert, wenn der Kunststoff zur Ausbildung des Kunststoffformteils mit hohem Druck in den Formhohlraum eingespritzt wird.

Zur Lösung der Aufgabe wird schließlich auch ein Computerprogramm mit den Merkmalen des unabhängigen, auf ein derartiges Computerprogramm gerichteten Anspruchs vorgeschlagen. Erfindungsgemäß umfasst das Computerprogramm Befehle, die bewirken, dass die Spritzgießvorrichtung nach einem der Ansprüche 1 bis 10 das Verfahren nach einem der Ansprüche 11 bis 17 ausführt.

Teil der Erfindung ist ebenfalls ein computerlesbares Medium, auf dem das Computerprogramm nach Anspruch 20 gespeichert ist.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels.

Es zeigen in teilweise stark schematisierter Darstellung:
- Figur 1: eine perspektivische, teilausgebrochene Darstellung einer Spritzgießvorrichtung, wobei eine Spritzgießform der Spritzgießvorrichtung zu erkennen ist, die insgesamt drei in Bearbeitungspositionen befindliche und jeweils voneinander beabstandete Formplatten aufweist,
- Figur 2: die in Figur 1 mit dem Buchstaben A markierte Einzelheit in vergrößerter Darstellung,
- Figur 3: eine perspektivische, teilausgebrochene Darstellung der in den vorherigen Figuren dargestellten Spritzgießvorrichtung,
- Figur 4: die in Figur 3 mit dem Buchstaben B markierte Einzelheit in vergrößerter Darstellung, wobei hier vier Drehhalterungen einer Wechselvorrichtung der Spritzgießvorrichtung mit jeweils drei unterschiedlichen Funktionsteilhaltern und einem Platzhalterelement zu erkennen sind,
- Figur 5: eine teilausgebrochene Darstellung einer der in den vorherigen Figuren gezeigten Drehhalterungen zur Veranschaulichung der Funktionsweise einer Klemmvorrichtung der Spritzgießvorrichtung mit in Klemmstellung befindlichem Klemmstempel,
- Figur 6: die in Figur 5 gezeigte Drehhalterung mit gelöstem Klemmstempel der Klemmvorrichtung, wobei hier anstelle eines Funktionsteilhalters (vergleiche Figur 5) ein Platzhalterelement in seiner Gebrauchsstellung zu erkennen ist,
- Figur 7: die in Figur 5 mit dem Buchstaben C markierte Einzelheit in vergrößerter Darstellung, wobei hier der Funktionsteilhalter als Klemmhülse ausgebildet ist und ein Einführtrichter des Funktionsteilhalters sowie eine in dem Funktionsteilhalter ausgebildete Funktionsteilaufnahme sowie ein das Material des Funktionsteilhalters schwächender Klemmschlitz zu erkennen sind,
- Figur 8: der Funktionsteilhalter aus den Figuren 5 und 7 in vergrößerter Darstellung, wobei hier besonders gut zu erkennen ist, dass der Funktionsteilhalter als geschlitzte Klemmhülse ausgebildet ist,
- Figur 9: das in Figur 6 im Schnitt dargestellte Platzhalterelement in perspektivische Ansicht,
- Figur 10: eine stark schematisierte und geschnittene Seitenansicht der Spritzgießvorrichtung zur Veranschaulichung des Einsetzens von Funktionsteilen in den Funktionsteilhalter und der Funktionsweise der Klemmvorrichtung, wobei ein Funktionsteil in Form einer Hohlnadel mithilfe eines Funktionsteilhalters durch eine stirnseitige Einführöffnung mit einem Einführtrichter des Funktionsteilhalters eingeführt wurde, während ein Klemmstempel der Klemmvorrichtung in Offenstellung angeordnet ist,
- Figur 11: eine Figur 10 ähnelnde Schnittdarstellung der in Figur 10 gezeigten Elemente, wobei hier die Funktionsteileinlegevorrichtung nach Einbringen des Funktionsteils in den Funktionsteilhalter bereits wieder ein Stück zurückgezogen ist, während das Funktionsteil mithilfe des Klemmstempels der Klemmvorrichtung festgeklemmt und somit fixiert wird, so dass die Funktionsteileinlegevorrichtung von dem Funktionsteil abgezogen werden kann,
- Figur 12: eine stark schematisierte, geschnittene Ansicht der Spritzgießform, wobei hier bereits eine erste Formplatte mit einer Heißkanaldüse und einem Spritzendorn, eine zweite Formplatte mit einer Teilkavität für den Spritzenzylinder und Teile einer dritten Formplatte, die bereits in den Figuren 10 und 11 dargestellt war, zu erkennen sind,
- Figur 13: eine geschnittene Ansicht der geschlossenen Spritzgießform kurz vor Einspritzen des Kunststoffes zum Anspritzen des Kunststoffformteiles an das eingelegte Funktionsteil, wobei das Einlegeteil mithilfe des Spritzendornes in seine Spritzposition geschoben wurde, und wobei der Klemmstempel mit einer vergleichsweise hohen Kraft auf den Funktionsteilhalter und das darin eingeklemmte Funktionsteil drückt, um dieses in der für das ordnungsgemäße Spritzen erforderlichen Position zu halten,
- Figur 14: Die zum Entformen des fertigen Mehrkomponententeils bereits teilgeöffnete Spritzgießform, wobei hier der Klemmstempel in einer gelösten Position oder Offenstellung angeordnet ist, sowie
- Figur 15: eine Schnittdarstellung der in den vorherigen Figuren bereits gezeigten Spritzgießform mit in Spritzstellung befindlichen Formplatten, wobei hier anstelle eines Funktionsteilhalters das Platzhalterelement in seiner Gebrauchsstellung an dem Formhohlraum zu erkennen ist, um Vorspritzlinge ohne Funktionsteile zu produzieren und so die Verschwendung von Funktionsteilen bei der Herstellung von Ausschuss-Spritzlingen zu vermeiden.

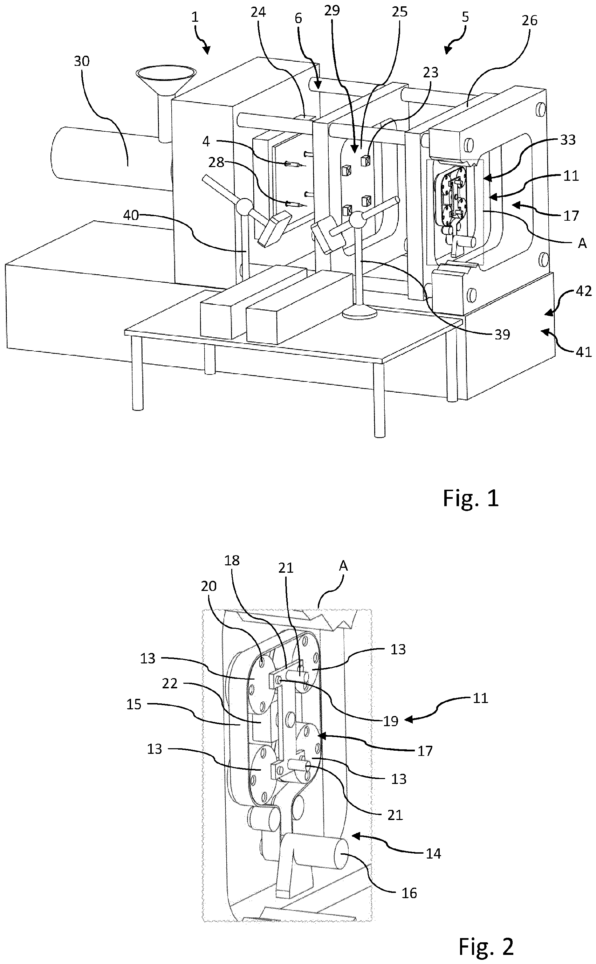

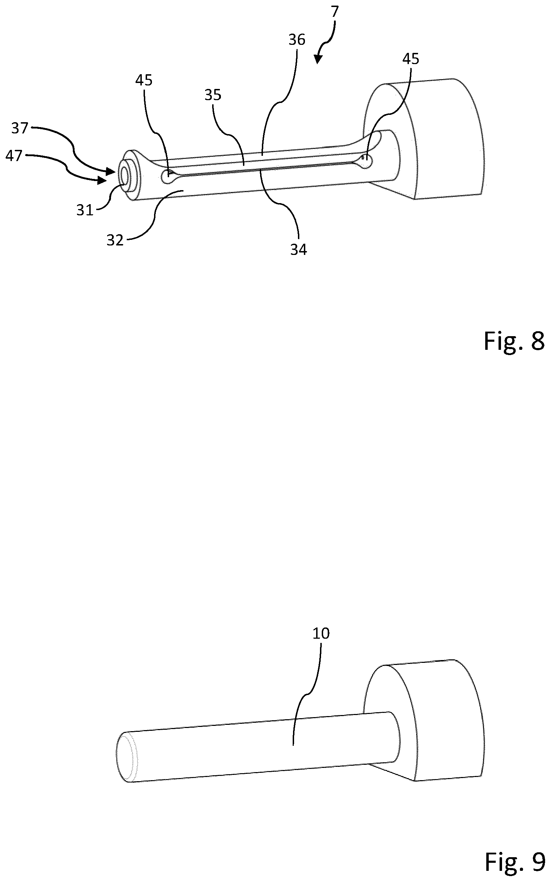

Die Figuren 1 bis 15 zeigen zumindest Teile einer im Ganzen mit 1 bezeichneten Spritzgießvorrichtung.

Die Spritzgießvorrichtung 1 dient dazu, Kunststoffformteile 2 an Funktionsteile 3 zur Herstellung von Mehrkomponententeilen 4 anzuspritzen.

Im vorliegenden Ausführungsbeispiel dient die Spritzgießvorrichtung 1 dazu, den Spritzenzylinder 2 aus Kunststoff an Nadeln oder Hohlnadeln 3 zur Bildung von Spritzen 4 anzuspritzen.

Die Spritzgießvorrichtung 1 weist dazu eine Spritzgießform 5 auf, die zumindest ein Formhohlraum 6 aufweist oder definiert. Der Formhohlraum 6 dient zur bereichsweisen Aufnahme eines Funktionsteils 3 und zum Anspritzen des Kunststoffformteils 2 an das Funktionsteil 3 zur Bildung des Mehrkomponententeils 4.

Die Spritzgießform 5 der Spritzgießvorrichtung 1 ist als Mehrfach-Spritzgießform ausgebildet und weist im gezeigten Ausführungsbeispiel insgesamt vier Formhohlräume 6 auf.

Für jeden der Formhohlräume 6 weist die Spritzgießvorrichtung 1 einen ersten Funktionsteilhalter 7 für einen ersten Funktionsteiltyp, einen zweiten Funktionsteilhalter 8 für einen zweiten Funktionsteiltyp und einen dritten Funktionsteilhalter 9 für einen dritten Funktionsteiltyp sowie ein Platzhalterelement 10 auf. Das Platzhalterelement 10 kann anstelle eines jeden Funktionsteilhalters 7, 8, 9 vor den ihm zugeordneten Formhohlraum 6 positioniert werden, wenn Vorspritzlinge ohne Funktionsteil 3 hergestellt werden sollen. Dies wird beispielsweise beim Anfahren der Spritzgießvorrichtung 1 solange gemacht, bis die Spritzgießvorrichtung 1 ihre Betriebstemperatur erreicht hat und die Mehrkomponententeile 4 mit der erforderlichen Güte herstellen kann.

Die Spritzgießvorrichtung 1 ist mit einer Wechselvorrichtung 11 ausgestattet, mit der der erste Funktionsteilhalter 7, der zweite Funktionsteilhalter 8, der dritte Funktionsteilhalter 9 sowie das Platzhalterelement 10 wahlweise in ihre jeweilige Gebrauchsstellung an dem Formhohlraum 6, dem sie zugeordnet sind, positioniert werden können.

Als Funktionsteile 3 werden im gezeigten Ausführungsbeispiel Hohlnadeln 3 verwendet, die an ihrem distalen Ende einen Schliff aufweisen. An eine Hohlnadel 3 wird ein Kunststoffformteil 2 in Form eines Spritzenzylinders angespritzt, um ein Mehrkomponententeil 4 in Form einer Spritze zu erzeugen.

Jeder der drei unterschiedlichen Funktionsteilhalter 7, 8 und 9 dient dazu, einen bestimmten Nadeltyp also Funktionsteiltyp aufzunehmen. Dabei können sich die mit den Funktionsteilhaltern 7, 8 und 9 aufnehmbaren Funktionsteile 3 beispielsweise hinsichtlich ihres Durchmessers und/oder ihrer Länge voneinander unterscheiden.

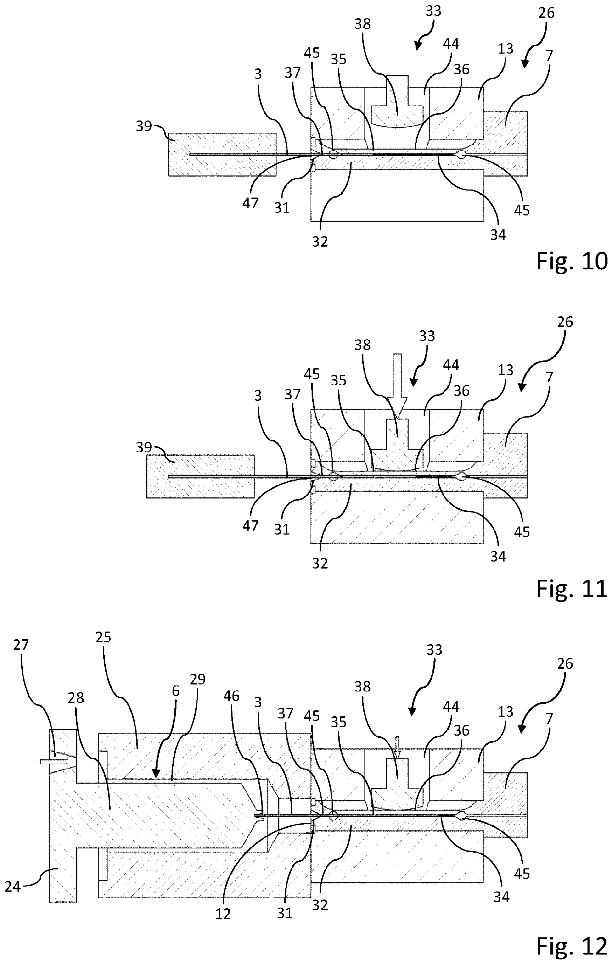

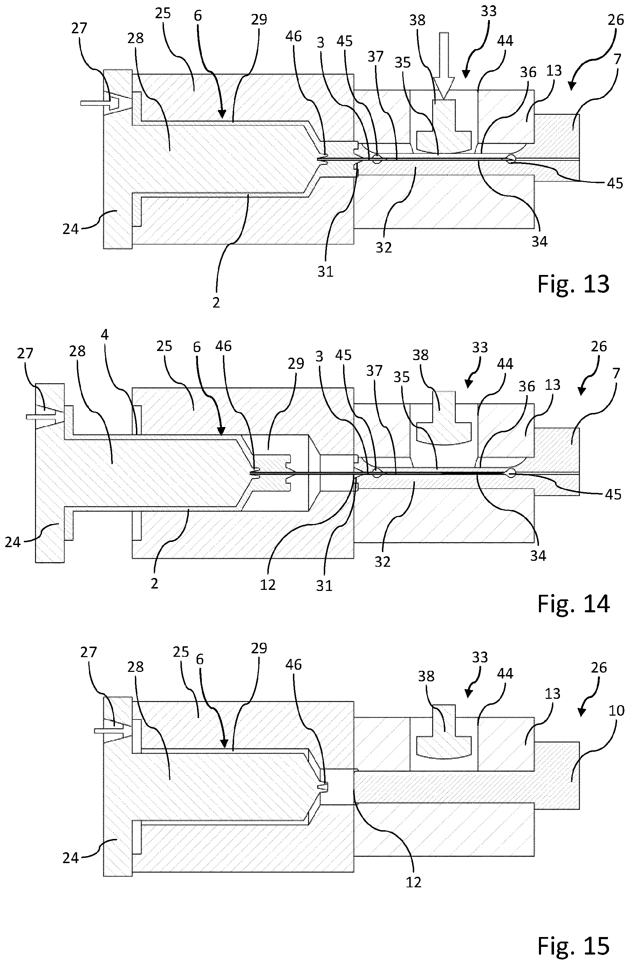

Die Funktion der Funktionsteilhalter 7, 8 und 9 ist gut anhand der Figuren 10 bis 14 zu erkennen. Sie werden dazu verwendet, Funktionsteile 3, hier Hohlnadeln 3 für die Herstellung von Spritzen 4, beim Anspritzen eines Kunststoffformteils 2 in Form eines Spritzenzylinders an die Funktionsteile 3 in ihrer Spritzposition zu halten. Figur 13 zeigt den ersten Funktionsteilhalter 7 in seiner Gebrauchsstellung vor dem Formhohlraum 6, wobei er eine Hohlnadel 3 als Funktionsteil 3 in ihrer Spritzposition fixiert, so dass sie zumindest bereichsweise in den Formhohlraum 6 Spritzgießform 5 hineinragt, um anschließend mit Kunststoff unter Ausbildung eines Spritzenzylinders als Kunststoffformteil 2 umspritzt zu werden.

Figur 15 zeigt das Platzhalterelement 10 in seiner Gebrauchsstellung als Platzhalter für einen der Funktionsteilhalter 7, 8, 9 vor dem Formhohlraum 6 der Spritzgießform 5. Hierbei verdeckt das Platzhalterelement 10 eine Öffnung 12 des Formhohlraums 6 für das Funktionsteil 3 und schließt diese nach außen hin ab.

Die Wechselvorrichtung 11 umfasst insgesamt vier Drehhalterungen 13. An jeder der Drehhalterungen 13 ist jeweils ein erster Funktionsteilhalter 7, ein zweiter Funktionsteilhalter 8, ein dritter Funktionsteilhalter 9 sowie ein Platzhalterelement 10 angeordnet.

Die Spritzgießvorrichtung 1 umfasst eine Antriebsvorrichtung 14 für die Drehhalterungen 13. Die Antriebsvorrichtung 14 weist einen Antriebsriemen 15 auf, über den ein Antriebsmotor 16 der Antriebsvorrichtung 14 mit den Drehhalterungen 13 verbunden ist. Über den Antriebsriemen 15 kann die Antriebskraft des Antriebsmotors 16 auf alle Drehhalterungen 13 übertragen werden. So können die Drehhalterungen 13 mithilfe eines einzigen Antriebsmotors 16 simultan verstellt werden.

Die Spritzgießvorrichtung 1 umfasst ferner eine Arretiervorrichtung 17, die besonders gut in der vergrößerten Detailansicht der Einzelheit A gemäß Figur 2 zu erkennen ist. Die Arretiervorrichtung 17 dient dazu, die Drehhalterungen 13 in einer gewählten Drehstellung zu arretieren.

Die Arretiervorrichtung 17 umfasst einen Arretierhebel 18, an dem vier Arretierbolzen 19 angeordnet sind. Die Drehhalterungen 3 weisen an ihrer dem Arretierhebel 18zugewandten Rückseite jeweils vier Arretierlöcher 20 für die Arretierbolzen 19 auf. Die vier Arretierlöcher 20 einer Drehhalterung 13 sind gleichmäßig um eine Rotationachse der Drehhalterung 13 an der Rückseite der Drehhaltung 13 versetzt zueinander angeordnet und definieren jeweils eine Drehposition der Drehhalterung 13. An einer Rückseite des Arretierhebels 18, die den Arretierbolzen 19 abgewandt ist, sind zwei Führungsbolzen 21 zu erkennen. Sie dienen dazu, die durch einen Hubzylinder 22 der Arretiervorrichtung 17 verursachte Hubbewegung des Arretierhebels 18 zum Arretieren bzw. zum Freigeben der Drehhalterungen 13 zu führen.

Insbesondere Figur 1 zeigt, dass die Spritzgießvorrichtung 1 für jeden ihrer insgesamt vier Formhohlräume 6 jeweils öffenbare Formeinsätze 23 aufweist. Sie dienen dazu, einen vorderen Teil der herzustellenden Mehrkomponententeile 4, hier der Spritzen 4 zu definieren. Die öffenbaren Formeinsätze 23 erlauben es, Kunststoffformteile 2 mit Schrägen oder Hinterschneidungen zu spritzen.

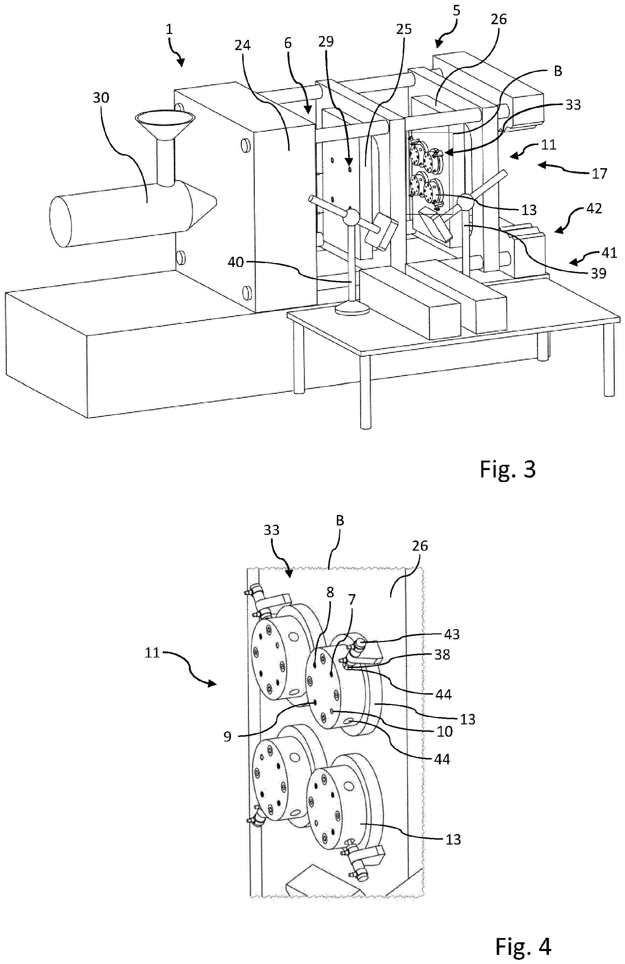

Die Spritzgießform 5 umfasst insgesamt drei Formplatten 24, 25 und 26. Die Formplatten 24, 25 und 26 können zwischen einer geschlossenen Spritzposition (siehe z.B. Figuren 13 und 15) und einer Bearbeitungsposition mit jeweils zueinander beabstandeten Formplatten 24, 25 und 26 (siehe z. B. Figuren 1 und 3) verstellt werden. Die Formhohlräume 6 sind dabei zwischen der auch als düsenseitigen Formplatte 24 zu bezeichnenden Formplatte 24 und der mittleren Formplatte 25 ausgebildet. An der dritten Formplatte 26 sind die Funktionsteilhalter 7, 8, 9 und die Platzhalterelemente 10 angeordnet. Auch die Wechselvorrichtung 11 der Spritzgießvorrichtung ist an der dritten Formplatte 26 und hier an einer den übrigen beiden Formplatten 24 und 25 abgewandten Rückseite der dritten Formplatte 26 angeordnet.

Die Figuren 12 bis 15 zeigen ferner, dass die düsenseitige Formplatte 24 außer Heißkanaldüsen 27 auch Spritzendorne 28 aufweist. Die Spritzendorne 28 sind bei geschlossenen oder in Spritzposition befindlichen Formplatten 24, 25 und 26 in korrespondierend ausgebildete Teilkavitäten 29 der mittleren Formplatte 25 eingefahren und geben die Form der an die Einlegeteile 3, hier die Hohlnadeln 3, anzuspritzenden Spritzenzylinder 2 vor.

Die Spritzgießvorrichtung 1 verfügt über ein Spritzaggregat 30, das über ein entsprechendes Heißkanalsystem mit den Heißkanaldüsen 27 in der düsenseitigen Formplatte 24 verbunden ist.

Die Funktionsteilhalter 7, 8 und 9 weisen jeweils einen Einführtrichter 31 zum Einführen der Funktionsteile 3 in die Funktionsteilhalter 7, 8, 9 auf. Ferner umfasst jeder der Funktionsteilhalter 8, 9 zudem eine Klemmenhülse 32 bzw. ist als solche ausgebildet. Durch die Einführtrichter 31 gelangen die Funktionsteile 3 somit in die Klemmhülsen 32 der Funktionsteilhalter 7, 8, 9.

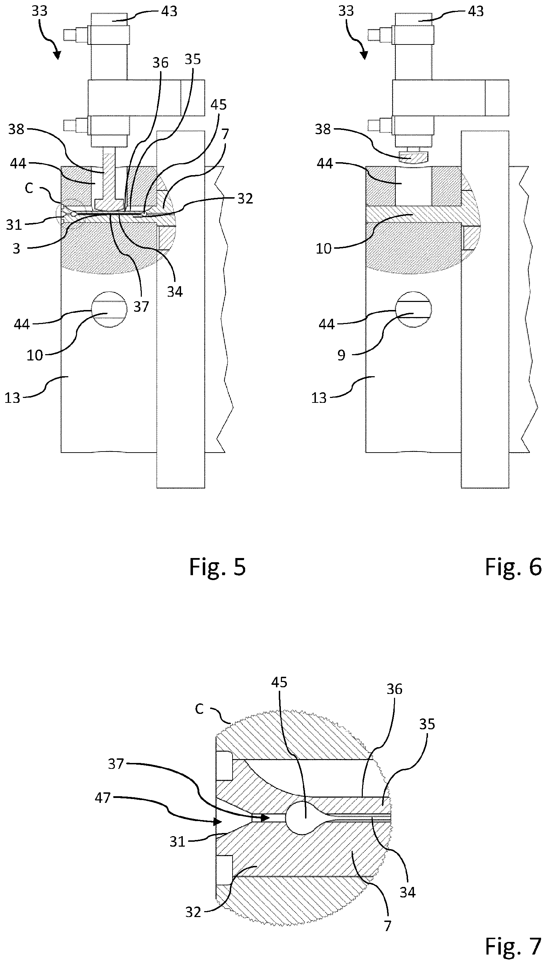

Die Spritzgießvorrichtung 1 weist eine Klemmvorrichtung 33 auf. Mithilfe der Klemmvorrichtung 33 können die Funktionsteile 3 in den Klemmhülsen 32 der Funktionsteilhalter 7, 8 und 9 festgeklemmt werden. Die als Klemmhülsen 32 weisen jeweils einen in Längsrichtung der jeweiligen Klemmhülse 32 verlaufenden Klemmschlitz 34 auf. Ein solcher Klemmschlitz 34 ist besonders gut in den Figuren 5 bis 8 zu erkennen. Der Klemmschlitz 34 weist im Bereich seiner beiden Enden jeweils eine Erweiterung 45 zur Materialschwächung der Klemmhülse 32 auf und erlaubt es, diese vergleichsweise einfach reversibel zu verformen. Die Klemmhülse 32 ist mit einem Klemmabschnitt 35 versehen, der zwischen den beiden Erweiterungen 45 des Klemmschlitzes 34 ausgebildet ist. Der Klemmabschnitt 35 weist eine außenseitige Druckfläche 36 auf. Zur Verengung einer Funktionsteilaufnahme 37 der Klemmhülse 32, in die die als Hohlnadeln ausgebildeten Funktionsteile 3 eingeschoben werden können, kann diese außenseitige Druckfläche 36 des Klemmabschnitts 35 der Klemmhülse 32 mit einem Klemmstempel 38 der Klemmvorrichtung 33 beaufschlagt werden.

Zur Betätigung der Klemmstempels 38 weist die Klemmvorrichtung 33 für jeden Klemmstempel 38 jeweils einen Druckzylinder 43 auf. Die Klemmstempel 38 werden jeweils durch eine Einführöffnung 44 an den Drehhalterungen 13 zugestellt. Jede Drehalterung 13 weist zumindest für jeden der drei Funktionsteilhalter 7, 8, 9 jeweils eine derartige Einführöffnung 44 auf.

Die Spritzendorne 28 verfügen an ihrem jeweiligen distalen Ende über eine Aufnahmevertiefung 46. Sie dient dazu, ein proximales Ende eines Funktionsteils 3 zu erfassen. Die Figuren 12 bis 14 verdeutlichen, dass die Funktionsteile 3 mithilfe der Spritzendorne 28 und ihrer Aufnahmevertiefungen 46 beim Schließen der Spritzgießform 5 in ihre Spritzposition bewegt werden.

Die Aufnahmevertiefungen 46 stellen ferner sicher, dass die Hohlnadeln 3 an der fertigen Spritze 4 durchgängig bleiben, also nicht mit Kunststoffmaterial beim Spritzen des Spritzenzylinders 2 zugesetzt werden.

Die Spritzgießvorrichtung 1 weist außerdem eine Funktionsteileinlegevorrichtung 39 auf. Mit der Funktionsteileinlegevorrichtung 39 können die Funktionsteile 3 in Klemmhülsen 32 der Funktionsteilhalter 7, 8 und 9 eingelegt werden, je nachdem welcher Funktionsteilhalter 7, 8 und 9 in Gebrauchsstellung angeordnet ist.

Die Funktionsteileinlegevorrichtung 39 ist dazu eingerichtet, vier Funktionsteile 3 gleichzeitig in die Funktionsteilhalter 7, 8, 9 und ihre Klemmhülsen 32 einzulegen.

Mithilfe eines Entnahmegreifers 40 können vier fertige Mehrkomponententeile 4, hier also Spritzen, der Spritzgießform 5 gleichzeitig entnommen werden.

Auf der zuvor beschriebenen Spritzgießvorrichtung 1 lässt sich das nachfolgend beschriebene Verfahren ausführen. Hierbei wird ein Funktionsteil 3 eines ersten Funktionsteiltyps mit einem darauf abgestimmten ersten Funktionsteilhalter 7 wenigstens bereichsweise in einen Formhohlraum 6 der Spritzgießvorrichtung 1 hineinragend in Spritzposition gehalten, wenn ein Mehrkomponententeil 4 mit einem Funktionsteil 3 des ersten Funktionsteiltyps hergestellt werden soll. Ein Funktionsteil 3 zumindest eines weiteren Funktionsteiltyps kann mithilfe zumindest eines weiteren, darauf abgestimmten Funktionsteilhalters 8, 9 wenigstens bereichsweise in den Formhohlraum 6 hineinragend in Spritzposition gehalten werden, wenn ein Mehrkomponententeil 4 mit einem Funktionsteil 3 des weiteren Funktionsteiltyps hergestellt werden soll.

Beim Anfahren der Spritzgießvorrichtung oder nach längeren Spritzpausen kann es passieren, dass die Spritzgießform zu kalt ist, um die gewünschte hohe Qualität der Spritzlinge zu gewährleisten. Die Spritzgießform könnte zwar vorgewärmt werden, was jedoch zusätzliche Heizaggregate erfordert und somit aufwändig und teuer ist. Zudem kann es schwierig sein, den Temperaturverlauf eines regulären Spritzzyklus innerhalb der Spritzgießform abzubilden. Es werden daher üblicherweise einige Spritzvorgänge durchgeführt, bis die Spritzgießvorrichtung auf Betriebstemperatur gebracht ist.

Die dabei anfallenden Spritzlinge werden als Vorspritzlinge bezeichnet und müssen aussortiert werden. Da die Funktionsteile 3 Widerhaken, Vorsprünge oder sonstige Bereiche aufweisen können, die eine sichere und feste Verbindung mit dem Kunststoffformteil 2 gewährleisten, ist ein Trennen von Funktionsteil 3 und Spritzmaterial der aussortierten Vorspritzlinge nur mit großem Aufwand möglich, um eine sortenreine Entsorgung oder Verwertung der unterschiedlichen Materialien zu erlauben. Zudem können die Funktionsteile zumeist nicht erneuert werden, was zu hohen Mehrkosten führt.

Diese Problematik wird umgangen, indem anstelle der Funktionsteilhalter 7, 8, 9 das Platzhalterelement 10 vor eine Öffnung 12 des Formhohlraums 6 für ein Funktionsteil 3 bewegt wird, wenn Vorspritzlinge ohne Funktionsteile 3 hergestellt werden sollen.

Die Positionierung der Funktionsteilhalter 7, 8 und 9 und des Platzhalterelements 10 erfolgt hierbei mithilfe der Wechselvorrichtung 11 der Spritzgießvorrichtung 1.

Das Platzhalterelement 10 wird an der Spritzgießvorrichtung 1 somit als Platzhalter anstelle eines Funktionsteilhalters 7, 8 oder 9 mit einem Funktionsteil 3 vor einer Einlegeöffnung 12 des Formhohlraums 6 für die Funktionsteile verwendet, um Vorspritzlinge ohne Funktionsteile 3 herstellen zu können.

Auf der zuvor beschriebenen Spritzgießvorrichtung 1 lässt sich ferner das nachfolgend beschriebene Verfahren ausführen. Hierbei wird ein Funktionsteil 3 in die Klemmhülse 3 eines der Funktionsteilhalter 7, 8, 9 eingeführt, wonach das Funktionsteil 3 mit der Klemmhülse 32 klemmend in seiner Spritzposition gehalten wird, wobei es zumindest bereichsweise in den einen Formhohlraum 6 einer Spritzgießform 5 der Spritzgießvorrichtung 1 hineinragt.

Das Funktionsteil 3 wird hierbei mit der Funktionsteileinlegevorrichtung 39 der Spritzgießvorrichtung 1, durch eine stirnseitige Einführöffnung 47 des Funktionsteilhalters 7,8,9 in die Funktionsteilaufnahme 37 des Funktionsteilhalters 7,8,9, die zumindest abschnittsweise innerhalb der Klemmhülse 32 verläuft und damit auch als Funktionsteilaufnahme 37 der Klemmhülse 32 bezeichnet werden kann, eingeführt.

Die Klemmhülse 32 wird mit dem Klemmstempel 38 der Klemmvorrichtung 33 beaufschlagt, um das Funktionsteil 3 in der Klemmhülse 32 festzuklemmen. Dabei werden der Klemmschlitz 34 der Klemmhülse 32 und dadurch die Funktionsteilaufnahme 37 der Klemmhülse 32 des Funktionsteilhalters 7,8,9 verengt. Konkret wird dabei die Druckfläche 36 des Klemmabschnitts 35 der Klemmhülse 32 mit dem Klemmstempel 38 beaufschlagt. Insbesondere die Figuren 10 bis 15 verdeutlichen, dass der Klemmstempel 38 dafür quer zu einer Längserstreckung der Klemmhülse 32 auf diese zugestellt wird.

Figur 10 zeigt, dass der Klemmstempel 38 die Druckfläche 36 der Klemmhülse 32 nicht beaufschlagt, wenn das Funktionsteil 3 mit der Funktionsteileinlegevorrichtung 39 in die Klemmhülse 32 eingeführt wird. Der Klemmstempel 38 befindet sich dann in einer gelösten Position.

Gemäß Figur 11 beaufschlagt der Klemmstempel 38 die Klemmhülse 32 mit einer Rückhaltedruckkraft, wenn das Funktionsteil 3 zumindest ein Stück weit in die Klemmhülse 32 eingeführt ist, wodurch das Funktionsteil 3 in der Klemmhülse 32 zurückgehalten wird, wenn die Funktionsteileinlegevorrichtung 39 in ihre Ausgangsstellung bewegt und von dem Funktionsteil 3 entfernt wird.

Figur 12 veranschaulicht, dass das Funktionsteil 3 durch Schließen der Spritzgießform 5 in seine Spritzposition geschoben wird. Hierbei beaufschlagt der Klemmstempel 38 die Klemmhülse 32 mit einer Druckkraft, die kleiner als die Rückhaltedruckkraft ist, die zum Zurückhalten des Funktionsteils 3 in der Klemmhülse 32 aufgebracht wird, wenn die Funktionsteileinlegevorrichtung 39 von dem Funktionsteil 3 entfernt wird. Mithilfe des leicht an die Klemmhülse 32 angedrückten Klemmstempels 33 kann ein seitliches Ausbrechen des Funktionsteils 3 beim Schließen der Spritzgießform 5 verhindert werden.

Figur 13 zeigt die Spritzgießform 3 kurz nach dem Einspritzen des Kunststoffs zur Ausbildung des Kunststoffformteils 2. Wenn das Kunststoffformteil 2 an das Funktionsteil 3 angespritzt wird, beaufschlagt der Klemmstempel 38 die Klemmhülse 32 mit einer Druckkraft die größer als die Druckkraft ist, die der Klemmstempel 38 auf die Klemmhülse 32 aufbringt, wenn die Spritzgießform 5 geschlossen und dabei das Funktionsteil 3 in seine Spritzposition bewegt wird.

Gemäß den Figuren 14 und 15 befindet sich der Klemmstempel 38 beim Entformen des fertigen Mehrkomponententeils 4 ebenso in einer gelösten Position, wie bei der Verwendung des Platzhalterelements 10 anstelle eines der Funktionsteilhalter 7, 8, 9.

Die Erfindung betrifft ferner ein Computerprogramm, das Befehle umfasst, die bewirken, dass die zuvor beschriebene Spritzgießvorrichtung 1 die zuvor beschriebenen Verfahren und insbesondere das Verfahren gemäß den Verfahrensansprüchen ausführt. Das Computerprogramm ist auf einem computerlesbaren Medium 41 gespeichert, das von einer Steuereinrichtung 42 der Spritzgießvorrichtung 1 ausgelesen werden kann.

Die Erfindung befasst sich mit Verbesserungen auf dem technischen Gebiet der Herstellung von Mehrkomponententeilen 4, die ein Funktionsteil 3, insbesondere eine Hohlnadel, umfassen, an das ein Kunststoffformteil 2, insbesondere ein Spritzenzylinder 2, angespritzt ist. Um Funktionsteile 3 beim Anspritzen der Kunststoffformteile 2 sicher und schonend halten zu können, wird vorgeschlagen, dass zumindest ein Funktionsteilhalter 7, 8, 9 der Spritzgießvorrichtung 1 eine Klemmhülse 32 zum klemmenden Halten eines Funktionsteils 3 umfasst. Um die Spritzgießvorrichtung 1 schnell und komfortabel umrüsten zu können, weist diese ferner eine Wechselvorrichtung 11 auf, mit der auf unterschiedliche Funktionsteiltypen abgestimmte Funktionsteilhalter 7, 8, 9 und/oder ein Funktionsteilhalter 8 und ein Platzhalterelement 10 wahlweise in ihre Gebrauchsstellung vor einen Formhohlraum 6 der Spritzgießform 5 der Spritzgießvorrichtung 1 gebracht werden können.

### Bezugszeichenliste

- 1: Spritzgießvorrichtung
- 2: Kunststoffformteil/Spritzenzylinder
- 3: Funktionsteil/Hohlnadel
- 4: Mehrkomponententeil/Spritze
- 5: Spritzgießform
- 6: Formhohlraum
- 7: erster Funktionsteilhalter
- 8: zweiter Funktionsteilhalter
- 9: dritter Funktionsteilhalter
- 10: Platzhalterelement
- 11: Wechselvorrichtung
- 12: Öffnung für 3 in 6
- 13: Drehhalterung
- 14: Antriebsvorrichtung
- 15: Antriebsriemen
- 16: Antriebsmotor
- 17: Arretiervorrichtung
- 18: Arretierhebel
- 19: Arretierbolzen
- 20: Arretierlöcher
- 21: Führungsbolzen
- 22: Hubzylinder
- 23: öffenbarer Formeinsatz
- 24: düsenseitige Formplatte
- 25: mittlere Formplatte
- 26: äußere Formplatte
- 27: Heißkanaldüse
- 28: Spritzendorn
- 29: Teilkavität
- 30: Spritzaggregat
- 31: Einführtrichter an 7,8,9
- 32: Klemmhülse
- 33: Klemmvorrichtung
- 34: Klemmschlitz
- 35: Klemmabschnitt
- 36: Druckfläche
- 37: Funktionsteilaufnahme
- 38: Klemmstempel
- 39: Funktionsteileinlegevorrichtung
- 40: Entnahmegreifer
- 41: computerlesbares Medium
- 42: Steuervorrichtung
- 43: Druckzylinder von 33
- 44: Einführöffnung für 38 in 13
- 45: Erweiterung von 34
- 46: Aufnahmevertiefung an 28 für 3
- 47: stirnseitige Einführöffnung an 7, 8, 9

## Patentansprüche

1. Spritzgießvorrichtung (1) mit einer Spritzgießform (5), die zumindest einen Formhohlraum (6) zur wenigstens bereichsweisen Aufnahme eines Funktionsteils (3) und zum Anspritzen eines Kunststoff-Formteils (2) an das Funktionsteil (3) zur Bildung eines Mehrkomponenten-Teils (4), insbesondere einer Spritze (4), aufweist, **wobei** die Spritzgießvorrichtung (1) zumindest einen Funktionsteilhalter (7,8,9) aufweist, **dadurch gekennzeichnet, dass** der Funktionsteilhalter (7, 8, 9) eine Klemmhülse (32) zum klemmenden Halten eines Funktionsteils (3) in seiner Spritzposition umfasst, in der das Funktionsteil (3) zumindest bereichsweise in den Formhohlraum (6) hineinragt, und dass die Spritzgießvorrichtung (1) eine Klemmvorrichtung (33) mit zumindest einem Klemmstempel (38) aufweist, der quer zu einer Längserstreckung der Klemmhülse (32) zustellbar ist, um ein in der Klemmhülse (32) befindliches Funktionsteil (3) festzuklemmen, wobei die Klemmhülse (32) eine Funktionsteilaufnahme (37) und einen Klemmabschnitt (35) mit einer außenseitigen Druckfläche (36) aufweist, die zur Verengung der Funktionsteilaufnahme (37) mit dem Klemmstempel (38) der Klemmvorrichtung (33) beaufschlagbar ist.

2. Spritzgießvorrichtung (1) nach Anspruch 1, **dadurch gekennzeichnet, dass** die Klemmvorrichtung (33) zumindest ein Stellmittel (43), insbesondere einen Druckzylinder (43), zur Betätigung des zumindest einen Klemmstempels (38) aufweist.

3. Spritzgießvorrichtung (1) nach einem der Ansprüche 1 oder 2, **dadurch gekennzeichnet, dass** die Klemmhülse (32) einen vorzugsweise in Längsrichtung der Klemmhülse (32) verlaufenden Klemmschlitz (34) aufweist, insbesondere wobei der Klemmschlitz (34) im Bereich seiner beiden Enden zur Materialschwächung der Klemmhülse (32) jeweils eine Erweiterung (45) aufweist.

4. Spritzgießvorrichtung (1) nach einem der vorherigen Ansprüche, **dadurch gekennzeichnet, dass** der zumindest eine Funktionsteilhalter (7), insbesondere in oder an der Klemmhülse (32), einen Einführtrichter (31) zum Einführen eines Funktionsteils (3) in die Klemmhülse (32), insbesondere in die Funktionsteilaufnahme (37) aufweist.

5. Spritzgießvorrichtung (1) nach einem der vorherigen Ansprüche, **dadurch gekennzeichnet, dass** die Spritzgießvorrichtung (1) zumindest einen weiteren Funktionsteilhalter (8,9) aufweist, der auf einen anderen Funktionsteiltyp abgestimmt ist, insbesondere wobei der zumindest eine weitere Funktionsteilhalter (8,9) eine Klemmhülse (32) zum klemmenden Halten eines Funktionsteils (3) umfasst.

6. Spritzgießvorrichtung (1) nach einem der vorherigen Ansprüche, **dadurch gekennzeichnet, dass** die Spritzgießvorrichtung (1) zumindest ein Platzhalterelement (10) aufweist, das als Platzhalter für einen Funktionsteilhalter (7,8,9) in Gebrauchsstellung an dem Formhohlraum (6) positionierbar ist.

7. Spritzgießvorrichtung (1) nach einem der vorherigen Ansprüche, **dadurch gekennzeichnet, dass** die Spritzgießvorrichtung (1) eine Wechselvorrichtung (11) umfasst, mit der der zumindest eine Funktionsteilhalter (7) und zumindest ein weiterer Funktionsteilhalter (8,9) und/oder ein oder das Platzhalterelement (10) als Platzhalter für einen Funktionsteilhalter (7,8,9) wahlweise in ihre jeweilige Gebrauchsstellung an dem Formhohlraum (6) positionierbar sind.

8. Spritzgießvorrichtung (1) nach einem der vorherigen Ansprüche, **dadurch gekennzeichnet, dass** die Spritzgießvorrichtung (1) eine Funktionsteileinlegevorrichtung (39) aufweist, mit der ein Funktionsteil (3) in die Klemmhülse (32) des zumindest einen Funktionsteilhalters (7) einlegbar ist.

9. Spritzgießvorrichtung (1) nach einem der vorherigen Ansprüche, **dadurch gekennzeichnet, dass** die Funktionsteile (3) Nadeln oder Hohlnadeln für Spritzen (4) sind und/oder dass der zumindest eine Funktionsteilhalter (7,8,9), insbesondere die Klemmhülse (32), als Nadelhalter ausgebildet ist, vorzugsweise wobei ein erster Funktionsteilhalter (7) auf einen ersten Nadeldurchmesser und zumindest ein weiterer Funktionsteilhalter (8,9) auf einen anderen Nadeldurchmesser abgestimmt sind.

10. Spritzgießvorrichtung (1) nach einem der vorherigen Ansprüche, **dadurch gekennzeichnet, dass** die Spritzgießform (5) zumindest drei Formplatten (24,25,26) aufweist, die zwischen einer geschlossenen Spritzposition und einer Bearbeitungsposition mit jeweils zueinander beabstandeten Formplatten (24, 25, 26) verstellbar sind, wobei der Formhohlraum (6) zwischen zwei Formplatten (24,25) ausgebildet ist und an der dritten Formplatte (26) der zumindest eine Funktionsteilhalter (7) und/oder zumindest ein weiterer Funktionsteilhalter (8,9) und/oder ein Platzhalterelement (10) angeordnet sind.

11. Verfahren zum Spritzgießen von Mehrkomponenten-Teilen (4), insbesondere von Spritzen, die jeweils zumindest ein Funktionsteil (3) und ein daran angespritztes KunststoffFormteil (2) umfassen, unter Verwendung einer Spritzgießvorrichtung (1), insbesondere nach einem der vorherigen Ansprüche, **dadurch gekennzeichnet, dass** ein Funktionsteil (3) in eine Klemmhülse (32) eines Funktionsteilhalters (7,8,9) eingeführt wird, und dass das Funktionsteil (3) mit der Klemmhülse (32) klemmend in seiner Spritzposition gehalten wird, wobei es zumindest bereichsweise in den einen Formhohlraum (6) einer Spritzgießform (5) der Spritzgießvorrichtung (1) hineinragt, wobei eine Druckfläche (36) eines Klemmabschnitts (35) der Klemmhülse (32) mit einem Klemmstempel (38) der Klemmvorrichtung (33) beaufschlagt wird, wobei der Klemmstempel (38) quer zu einer Längserstreckung der Klemmhülse (32) zugestellt wird, um das Funktionsteil (3) in der Klemmhülse (32) festzuklemmen.

12. Verfahren nach Anspruch 11, **dadurch gekennzeichnet, dass** das Funktionsteil (3), insbesondere mit einer Funktionsteileinlegevorrichtung (39) der Spritzgießvorrichtung (1), durch eine, insbesondere stirnseitige, Einführöffnung (47) des Funktionsteilhalters (7,8,9) in eine Funktionsteilaufnahme (37) des Funktionsteilhalters (7,8,9), insbesondere der Klemmhülse (32), eingeführt wird.

13. Verfahren nach Anspruch 11 oder 12, **dadurch gekennzeichnet, dass** ein Klemmschlitz (34) der Klemmhülse (32) und dadurch eine oder die Funktionsteilaufnahme (37) des Funktionsteilhalters (7,8,9) verengt werden.

14. Verfahren nach einem der vorherigen Ansprüche, **dadurch gekennzeichnet, dass** der Klemmstempel (38) die Klemmhülse (32), insbesondere die Druckfläche (36), nicht beaufschlagt, wenn das Funktionsteil (3) mit einer oder der Funktionsteileinlegevorrichtung (39) in die Klemmhülse (32) eingeführt wird, und/oder dass der Klemmstempel (38) die Klemmhülse (32) mit einer Rückhaltedruckkraft beaufschlagt, wenn das Funktionsteil (3) zumindest ein Stück weit in die Klemmhülse (32) eingeführt ist, wodurch das Funktionsteil (3) in der Klemmhülse (32) gehalten wird, wenn eine oder die Funktionsteileinlegevorrichtung (39) von dem Funktionsteil (3) entfernt wird.

15. Verfahren nach einem der vorherigen Ansprüche, **dadurch gekennzeichnet, dass** das Funktionsteil (3) durch Schließen der Spritzgießform (5) in seine Spritzposition geschoben wird, vorzugsweise wobei der Klemmstempel (38) die Klemmhülse (32) mit einer Druckkraft beaufschlagt, insbesondere die kleiner als eine oder die Rückhaltedruckkraft ist, die zum Zurückhalten des Funktionsteils (3) in der Klemmhülse (32) aufgebracht wird.

16. Verfahren nach einem der vorherigen Ansprüche, **dadurch gekennzeichnet, dass** der Klemmstempel (38) die Klemmhülse (32) mit einer Druckkraft beaufschlagt, wenn das Kunststoffformteil (2) an das Funktionsteil (3) angespritzt wird, insbesondere wobei diese Druckkraft größer als eine Druckkraft ist, die der Klemmstempel (38) auf die Klemmhülse (32) aufbringt, wenn die Spritzgießform (5) geschlossen wird.

17. Computerprogramm, umfassend Befehle, die bewirken, dass die Spritzgießvorrichtung (1) nach einem der Ansprüche 2 bis 10 das Verfahren nach einem der Ansprüche 11 bis 16 ausführt.

18. Computerlesbares Medium (41), auf dem das Computerprogramm nach Anspruch 17 gespeichert ist.

## Claims

1. Injection-moulding device (1) having an injection mould (5) which has at least one mould cavity (6) for at least partially receiving a functional part (3) and for moulding a plastics moulding (2) onto the functional part (3) to form a multi-component part (4), in particular a syringe (4), wherein the injection-moulding device (1) has at least one functional part holder (7, 8, 9), **characterized in that** the functional part holder (7, 8, 9) comprises a clamping sleeve (32) for holding a functional part (3) in its injection position with clamping action, the functional part (3) at least partially projecting into the mould cavity (6) in said injection position, and **in that** the injection-moulding device (1) has a clamping device (33) having at least one clamping ram (38) which can be fed transversely with respect to a longitudinal extent of the clamping sleeve (32) in order to clamp a functional part (3) located in the clamping sleeve (32), wherein the clamping sleeve (32) has a functional part receptacle (37) and a clamping portion (35) having an outer pressure surface (36) which can be acted on by the clamping ram (38) of the clamping device (33) for the purpose of narrowing the functional part receptacle (37).

2. Injection-moulding device (1) according to Claim 1, **characterized in that** the clamping device (33) has at least one actuating means (43), in particular a pressure cylinder (43), for actuating the at least one clamping ram (38).

3. Injection-moulding device (1) according to either one of Claims 1 and 2, **characterized in that** the clamping sleeve (32) has a clamping slot (34) which preferably runs in a longitudinal direction of the clamping sleeve (32), in particular wherein the clamping slot (34) has, in the region of its two ends, a respective widened portion (45) for the purpose of weakening the material of the clamping sleeve (32).

4. Injection-moulding device (1) according to one of the preceding claims, **characterized in that** the at least one functional part holder (7) has, in particular in or on the clamping sleeve (32), an insertion funnel (31) for inserting a functional part (3) into the clamping sleeve (32), in particular into the functional part receptacle (37).

5. Injection-moulding device (1) according to one of the preceding claims, **characterized in that** the injection-moulding device (1) has at least one further functional part holder (8, 9) which is matched to a different functional part type, in particular wherein the at least one further functional part holder (8, 9) comprises a clamping sleeve (32) for holding a functional part (3) with clamping action.

6. Injection-moulding device (1) according to one of the preceding claims, **characterized in that** the injection-moulding device (1) has at least one placeholder element (10) which can be positioned as a placeholder for a functional part holder (7, 8, 9) in a use position on the mould cavity (6).

7. Injection-moulding device (1) according to one of the preceding claims, **characterized in that** the injection-moulding device (1) comprises a changeover device (11) by means of which the at least one functional part holder (7) and at least one further functional part holder (8, 9) and/or a or the placeholder element (10) as placeholder for a functional part holder (7, 8, 9) can be selectively positioned in their respective use position on the mould cavity (6).

8. Injection-moulding device (1) according to one of the preceding claims, **characterized in that** the injection-moulding device (1) has a functional part insertion device (39) by means of which a functional part (3) can be inserted into the clamping sleeve (32) of the at least one functional part holder (7).

9. Injection-moulding device (1) according to one of the preceding claims, **characterized in that** the functional parts (3) are needles or hollow needles for syringes (4), and/or **in that** the at least one functional part holder (7, 8, 9), in particular the clamping sleeve (32), is in the form of a needle holder, preferably wherein a first functional part holder (7) is matched to a first needle diameter and at least one further functional part holder (8, 9) is matched to another needle diameter.

10. Injection-moulding device (1) according to one of the preceding claims, **characterized in that** the injection mould (5) has at least three mould plates (24, 25, 26) which can be adjusted between a closed injection position and a processing position with respective mould plates (24, 25, 26) spaced apart from one another, wherein the mould cavity (6) is formed between two mould plates (24, 25) and the at least one functional part holder (7) and/or at least one further functional part holder (8, 9) and/or a placeholder element (10) are/is arranged on the third mould plate (26).

11. Method for injection moulding multi-component parts (4), in particular syringes, which each comprise at least one functional part (3) and a plastics moulding (2) moulded thereon, using an injection-moulding device (1), in particular according to one of the preceding claims, **characterized in that** a functional part (3) is inserted into a clamping sleeve (32) of a functional part holder (7, 8, 9), and **in that** the functional part (3) is held in its injection position with clamping action by means of the clamping sleeve (32), wherein said functional part at least partially projects into the one mould cavity (6) of an injection mould (5) of the injection-moulding device (1), wherein a pressure surface (36) of a clamping portion (35) of the clamping sleeve (32) is acted on by a clamping ram (38) of the clamping device (33), wherein the clamping ram (38) is fed transversely with respect to a longitudinal extent of the clamping sleeve (32) in order to clamp the functional part (3) in the clamping sleeve (32).

12. Method according to Claim 11, **characterized in that** the functional part (3) is inserted, in particular by means of a functional part insertion device (39) of the injection-moulding device (1), through an in particular end-side insertion opening (47) of the functional part holder (7, 8, 9) into a functional part receptacle (37) of the functional part holder (7, 8, 9), in particular of the clamping sleeve (32).

13. Method according to Claim 11 or 12, **characterized in that** a clamping slot (34) of the clamping sleeve (32) and, as a result, a or the functional part receptacle (37) of the functional part holder (7, 8, 9) are narrowed.

14. Method according to one of the preceding claims, **characterized in that** the clamping ram (38) does not act on the clamping sleeve (32), in particular the pressure surface (36), when the functional part (3) is inserted into the clamping sleeve (32) by means of a or the functional part insertion device (39), and/or **in that** the clamping ram (38) subjects the clamping sleeve (32) to a retaining pressure force when the functional part (3) has been inserted at least some way into the clamping sleeve (32), as a result of which the functional part (3) is held in the clamping sleeve (32) when a or the functional part insertion device (39) is removed from the functional part (3).

15. Method according to one of the preceding claims, **characterized in that** the functional part (3) is pushed into its injection position by closing of the injection mould (5), preferably wherein the clamping ram (38) subjects the clamping sleeve (32) to a pressure force, in particular which is lower than a or the retaining pressure force which is applied to retain the functional part (3) in the clamping sleeve (32).

16. Method according to one of the preceding claims, **characterized in that** the clamping ram (38) subjects the clamping sleeve (32) to a pressure force when the plastics moulding (2) is being moulded onto the functional part (3), in particular wherein this pressure force is greater than a pressure force which the clamping ram (38) applies to the clamping sleeve (32) when the injection mould (5) is being closed.

17. Computer program comprising commands which cause the injection-moulding device (1) according to one of Claims 2 to 10 to carry out the method according to one of Claims 11 to 16.

18. Computer-readable medium (41) on which the computer program according to Claim 17 is stored.

## Revendications

1. Dispositif de moulage par injection (1) avec un moule de moulage par injection (5) qui comporte au moins une cavité de moule (6) pour recevoir au moins partiellement une pièce fonctionnelle (3) et pour mouler par injection une pièce moulée en plastique (2) sur la pièce fonctionnelle (3) afin de former une pièce à composants multiples (4), en particulier une seringue (4), lequel dispositif de moulage par injection (1) comporte au moins une attache de pièce fonctionnelle (7, 8, 9), **caractérisé en ce que** cette attache de pièce fonctionnelle (7, 8, 9) comprend, pour maintenir par serrage une pièce fonctionnelle (3) dans sa position d'injection, une douille de serrage (32) dans laquelle la pièce fonctionnelle (3) fait au moins partiellement saillie dans la cavité de moule (6), et que ce dispositif de moulage par injection (1) comporte un dispositif de serrage (33) avec au moins un poinçon de serrage (38) qui est réglable transversalement par rapport à une extension longitudinale de la douille de serrage (32) afin de serrer une pièce fonctionnelle (3) se trouvant dans la douille de serrage (32), la douille de serrage (32) comportant un logement de pièce fonctionnelle (37) et une section de serrage (35) avec une surface de pression extérieure (36) qui peut être appliquée pour rétrécir le logement de pièce fonctionnelle (37) avec le poinçon de serrage (38) du dispositif de serrage (33).

2. Dispositif de moulage par injection (1) selon la revendication 1, **caractérisé en ce que** le dispositif de serrage (33) comporte au moins un moyen de réglage (43), en particulier un vérin presseur (43), pour actionner l'au moins un poinçon de serrage (38).

3. Dispositif de moulage par injection (1) selon une des revendications 1 ou 2, **caractérisé en ce que** la douille de serrage (32) comporte une fente de serrage (34) courant de préférence dans le sens longitudinal de la douille de serrage (32), laquelle fente de serrage (34) présente en particulier un élargissement (45) dans la région de chacune de ses deux extrémités pour affaiblir matériellement la douille de serrage (32).

4. Dispositif de moulage par injection (1) selon une des revendications précédentes, **caractérisé en ce que** l'au moins une attache de pièce fonctionnelle (7) possède, en particulier dans ou sur la douille de serrage (32), un cône d'insertion (31) pour insérer une pièce fonctionnelle (3) dans la douille de serrage (32), en particulier dans le logement de pièce fonctionnelle (37).

5. Dispositif de moulage par injection (1) selon une des revendications précédentes, **caractérisé en ce que** ce dispositif de moulage par injection (1) comporte au moins une autre attache de pièce fonctionnelle (8, 9) qui est adaptée à un autre type de pièce fonctionnelle, laquelle au moins une autre attache de pièce fonctionnelle (8, 9) comprend en particulier une douille de serrage (32) pour maintenir par serrage une pièce fonctionnelle (3).

6. Dispositif de moulage par injection (1) selon une des revendications précédentes, **caractérisé en ce que** ce dispositif de moulage par injection (1) comporte au moins un élément de remplacement (10) qui peut être positionné pour remplacer une attache de pièce fonctionnelle (7,8, 9) en position d'utilisation sur la cavité de moule (6).

7. Dispositif de moulage par injection (1) selon une des revendications précédentes, **caractérisé en ce que** ce dispositif de moulage par injection (1) comporte un dispositif d'échange (11) avec lequel l'au moins une attache de pièce fonctionnelle (7) et au moins une autre attache de pièce fonctionnelle (8, 9) et/ou un ou l'élément de remplacement (10) remplaçant une attache de pièce fonctionnelle (7, 8, 9) peuvent au choix être positionnés dans leur position d'utilisation respective sur la cavité de moule (6).

8. Dispositif de moulage par injection (1) selon une des revendications précédentes, **caractérisé en ce que** ce dispositif de moulage par injection (1) comporte un dispositif d'insertion de pièce fonctionnelle (39) avec lequel une pièce fonctionnelle (3) peut être insérée dans la douille de serrage (32) de l'au moins une attache de pièce fonctionnelle (7).

9. Dispositif de moulage par injection (1) selon une des revendications précédentes, **caractérisé en ce que** les pièces fonctionnelles (3) sont des aiguilles ou des aiguilles creuses pour des seringues (4) et/ou que l'au moins une attache de pièce fonctionnelle (7, 8, 9), en particulier la douille de serrage (32), fait office de porte-aiguille, de préférence une première attache de pièce fonctionnelle (7) étant adaptée à un premier diamètre d'aiguille et au moins une autre attache de pièce fonctionnelle (8, 9) à un autre diamètre d'aiguille.

10. Dispositif de moulage par injection (1) selon une des revendications précédentes, **caractérisé en ce que** le moule de moulage par injection (5) comporte au moins trois plaques de moule (24, 25, 26) qui peuvent être réglées entre une position d'injection fermée et une position de traitement avec les plaques de moule (24, 25, 26) espacées entre elles, la cavité de moule (6) étant formée entre deux plaques de moule (24, 25) et l'au moins une attache de pièce fonctionnelle (7) et/ou au moins une autre attache de pièce fonctionnelle (8, 9) et/ou un élément de remplacement (10) étant disposés sur la troisième plaque de moule (26).

11. Procédé de moulage par injection de pièces à composants multiples (4), en particulier de seringues qui comprennent chacune au moins une pièce fonctionnelle (3) et une pièce moulée en plastique (2) moulée par injection dessus, en utilisant un dispositif de moulage par injection (1), en particulier selon une des revendications précédentes, **caractérisé en ce qu'**une pièce fonctionnelle (3) est introduite dans une douille de serrage (32) d'une attache de pièce fonctionnelle (7, 8, 9) et que la pièce fonctionnelle (3) est maintenue par serrage dans sa position d'injection avec la douille de serrage (32) et fait au moins partiellement saillie dans la cavité de moule (6) d'un moule de moulage par injection (5) du dispositif de moulage par injection (1), une surface de pression (36) d'une section de serrage (35) de la douille de serrage (32) étant appliquée avec un poinçon de serrage (38) du dispositif de serrage (33), le poinçon de serrage (38) étant placé transversalement par rapport à une extension longitudinale de la douille de serrage (32) afin de bloquer la pièce fonctionnelle (3) dans la douille de serrage (32).

12. Procédé selon la revendication 11, **caractérisé en ce que** la pièce fonctionnelle (3) est introduite, en particulier avec un dispositif d'insertion de pièce fonctionnelle (39) du dispositif de moulage par injection (1), à travers un orifice d'introduction (47), en particulier frontal, de l'attache de pièce fonctionnelle (7, 8, 9), dans un logement de pièce fonctionnelle (37) de l'attache de pièce fonctionnelle (7, 8, 9), en particulier de la douille de serrage (32).

13. Procédé selon la revendication 11 ou 12, **caractérisé en ce qu'**une fente de serrage (34) de la douille de serrage (32) et, par conséquent, un ou le logement de pièce fonctionnelle (37) de l'attache de pièce fonctionnelle (7, 8, 9) sont rétrécis.

14. Procédé selon une des revendications précédentes, **caractérisé en ce que** le poinçon de serrage (38) n'applique pas la douille de serrage (32), en particulier la surface de pression (36), quand la pièce fonctionnelle (3) est introduite dans la douille de serrage (32) avec un ou le dispositif d'insertion de pièce fonctionnelle (39), et/ou que le poinçon de serrage (38) applique la douille de serrage (32) avec une force de pression de retenue quand la pièce fonctionnelle (3) est introduite au moins sur une certaine distance dans la douille de serrage (32), de sorte que la pièce fonctionnelle (3) est maintenue dans la douille de serrage (32) quand un ou le dispositif d'insertion de pièce fonctionnelle (39) est éloigné de la pièce fonctionnelle (3).

15. Procédé selon une des revendications précédentes, **caractérisé en ce que** la pièce fonctionnelle (3) est poussée dans sa position d'injection par la fermeture du moule de moulage par injection (5), de préférence le poinçon de serrage (38) appliquant la douille de serrage (32) avec une force de pression, en particulier qui est inférieure à une ou la force de pression de retenue qui est appliquée pour retenir la pièce fonctionnelle (3) dans la douille de serrage (32).

16. Procédé selon une des revendications précédentes, **caractérisé en ce que** le poinçon de serrage (38) applique la douille de serrage (32) avec une force de pression quand la pièce moulée en plastique (2) est moulée par injection sur la pièce fonctionnelle (3), en particulier cette force de pression étant supérieure à une force de pression qui applique le poinçon de serrage (38) sur la douille de serrage (32) quand le moule de moulage par injection est fermé.

17. Programme informatique comprenant des instructions qui provoquent l'exécution par le dispositif de moulage par injection (1) selon une des revendications 2 à 10 du procédé selon une des revendications 11 à 16.

18. Support lisible par ordinateur (41) sur lequel le programme informatique selon la revendication 17 est mémorisé.
